# EUROPEAN PATENT SPECIFICATION

(11) **EP 0 568 599 B1**
(45) Date of publication and mention of the grant of the patent: **05.04.1995**
(21) Application number: 92904064.0
(22) Date of filing: 24.01.1992
(51) Int. Cl.: D21C 9/08, D21H 21/02

(54) **METHOD FOR AVOIDING PITCH TROUBLES BY USE OF THERMOSTABLE LIPASE**
VERFAHREN ZUR VERMEIDUNG VON HARZSCHWIERIGKEITEN MITTELS EINER THERMOSTABILEN LIPASE
PROCEDE PERMETTANT D'EVITER LES PROBLEMES DE BRAI GRACE A UNE LIPASE THERMOSTABLE

(30) Priority: 25.01.1991 JP 85696/91
(43) Date of publication of application: 10.11.1993
(73) Proprietor: NOVO NORDISK A/S, 2880 Bagsvaerd (DK); NIPPON PAPER INDUSTRIES CO., LTD., Kita-ku, Tokyo 114 (JP)
(72) Inventor: MATSUKURA, Motoo, Saitamaken 330 (JP); FUJITA, Yuko, Tokyo 201 (JP); ABO, Masanobu, Chiba pref. 274 (JP); ITAMI, Ryoko, Funabashi-shi Chiba pref. 274 (JP)
(74) Representative: Knudsen, Sten Lottrup
(86) International application number: DK9200025
(87) International publication number: WO9213130

(56) References cited:
- EP-A- 0 374 700
- WO-A-88/02775
- WO-A-89/01032
- WO-A-91/07542

## Description

### TECHNICAL FIELD

This invention relates to a method for avoiding pitch troubles that arise in the production process for mechanical pulp such as ground wood pulp (in the following abbreviated as GP) or a paper-making process using mechanical pulp.

### BACKGROUND ART

In a paper-making process, free-floating pitch or attached pitch causes pitch troubles such as cohesion in various places in the paper-making machinery, contamination of the equipment, paper contamination and paper breaks. Since mechanical pulp such as GP is produced by grinding wood mechanically, it is characteristic that the components of the wood remain almost unchanged in the pulp. Further, it is well-known that wood from coniferous trees which is a main raw material for mechanical pulp contains a large amount of pitch constituents such as fatty acids, resin acids and fatty acid glycerides. Therefore, pitch troubles are easily caused when a large amount of mechanical pulp is used.

One method for avoiding pitch troubles that has been conducted in the past is the so-called seasoning, in which logs after felling are held outside for a long period. Other methods are e.g. adsorption by an inorganic filler such as talc or addition of a surfactant. Addition of a fatty acid glyceride hydrolysing enzyme (in the following called lipase) has also been tried, as disclosed in JP-A 2-160997 (equivalents AU-A-45822/89, EP-A-0 374 700).

The pitch components in wood can be reduced by the above-mentioned seasoning, but this requires 3 to 6 months or even longer and a large piece of land for holding a large amount of logs; and other methods do not provide a fundamental solution to pitch troubles, either. The addition of lipase disclosed in JP-A 2-160997 causes a restriction of the place of addition in the pulp production process, since there is a risk of inactivation above 70°C.

EP-A-0 499 618 (corresponding to WO-A-91/07542), a prior-art document within the meaning of Art. 54(3) EPC, discloses a process for hydrolysis of resin in pulp by carrying out enzymatic hydrolysis of resin in the presence of an enzyme with lipase and/or esterase activity simultaneously with peroxy bleaching of the pulp. The document also discloses a method for treating chemithermomechanical pulp (CTMP) with lipase.

It is the object of this invention to provide a method for more effectively avoiding pitch troubles in a production process for mechanical pulp or in a paper-making process using mechanical pulp.

### SUMMARY OF THE INVENTION

The present inventors noticed that in the production process for mechanical pulp the raw material for paper-making and/or the white water immediately after trituration of the logs or chips in a grinder or refiner reaches a high temperature above 70°C, and they discovered thermostable lipases that at this high temperature are able to hydrolyse triglycerides, which are a main component in causing pitch troubles; and they completed the invention.

Accordingly, the invention provides a method for avoiding pitch troubles in a process for production of mechanical pulp or a paper-making process using mechanical pulp, characterized by adding a lipase that is able to resist temperatures above 70°C to the pulp or to white water and holding at a temperature in the range 70-90°C to hydrolyse triglycerides in the pitch, provided that the hydrolysis of triglycerides is not simultaneous with peroxy bleaching of the pulp and that the pulp is not chemithermomechanical pulp.

### DETAILED DESCRIPTION OF THE INVENTION

Any lipase (EC 3.1.1.3) can be used in this invention if it has a thermostability that enables it to hydrolyse triglyceride, a main component of pitch, at temperatures above 70°C; more particularly, the lipase should yield at least 80% hydrolysis of triglyceride at a dosage of 60-80 Olive Oil Units (defined below) in 4% pulp slurry during 2 hours with stirring at pH 4.5, 70°C. To obtain a high degree of hydrolysis, a positionally non-specific lipase is preferred.

Such lipases can be found widely of animal, plant or microbial origin. Examples of microorganisms producing such thermostable lipases are strains of the genus *Candida* and *Pseudomonas*, particularly *Candida antarctica*, *C. tsukubaensis*, *C. auriculariae*, *C. humicola*, *C. foliarum*, *P. cepacia*, *P. fluorescens* and *P. fragi*. Lipases from strains of *C. antarctica* and *P. cepacia* are preferred, especially lipase A from *C. antarctica* strain DSM 3855. Such lipases and methods of producing are known from WO 88/02775 (equivalents JP-W 1-501120, DK-C 159,882), US 4,876,024 and WO 89/01032. The strain DSM 3959 (mentioned in WO 89/01032) was deposited at Deutsche Sammlung von Mikroorganismen (DSM) in Germany on 30 January 1987 under the terms of the Budapest Treaty.

The lipase to be used can be produced by the microorganism itself, or it can be produced by a transformant wherein the structural gene for the lipase has been inserted. Particularly preferred lipases are SP 341 (lipase from *Pseudomonas cepacia*) and SP 344 (lipase from *Candida antarctica*), products of Novo Nordisk A/S, Denmark. When SP 341 is added to a slurry of raw material for paper-making containing mechanical pulp obtained by trituration in a grinder or refiner, the optimum temperature for triglyceride hydrolysis activity is 60-70°C, and even at 80°C it shows 57.5% hydrolytic activity. The optimum temperature for SP 344 in the above-mentioned reaction is 70°C, and even at 80°C it shows 84% hydrolytic activity.

Adequate hydrolysis can be obtained even above or below the optimum temperature by increasing the enzyme dosage. Both of the above-mentioned two enzymes show good hydrolytic activity in a broad pH range, so in a process for producing mechanical pulp or a paper-making process using mechanical pulp, triglycerides in paper-making raw material and/or in white water can be removed by addition of these enzymes.

When adding heat-resistant lipase to paper-making raw material and/or white water, it is generally preferred to add it to an aqueous slurry of the paper-making raw material or to white water at 10-80°C. The lipase can be used at a temperature up to 90°C, most preferably at 70-80°C. The lipase can be used at pH in the range 4.5-8, especially 4.5-7, normally found in mechanical pulp. The lipase treatment can be made at any convenient consistency, e.g. from 0.5% to 30%. The holding time for the lipase treatment can be between 10 minutes and 5 hours, especially 0.5-2 hours.

The dosage of the thermostable lipase is preferably in the range 1-50 Olive Oil Units (units defined below) per g dry substance in the pulp or white water, particularly 5-25 Units per g. On weight basis the preferred dosage is 1-10,000 ppm based on the pulp weight in a slurry of paper-making raw material, or 0.01-1000 ppm based on white water.

1 olive oil unit is the amount of enzyme that liberates 1 »mole of oleic acid per minute from an emulsion of olive oil at 30°C and pH 9.0.

The enzyme hydrolysis of the olive oil is measured at pH-stat by recording the consumption of NaOH needed to titrate the liberated acid as a function of time.

According to the invention, it becomes possible to add lipase even directly after trituration in a grinder or refiner which is the initial step in a process for producing mechanical pulp or a paper-making process using mechanical pulp, and it can be allowed to react for a longer time with the substrate triglycerides in the paper-making raw material and/or white water, so pitch is removed effectively. In plants equipped with a latency tank (generally held above 70°C), the lipase treatment can conveniently be made in this tank.

Accordingly, pitch troubles can be avoided in a simple manner without any negative effect on the product quality or on the operation. Further, most of the water in the pulping or paper-making process is recycled and re-used, but enzyme having high thermostability retains its hydrolytic activity even during recycling, and therefore the enzyme dosage can be reduced, so it is economical compared to lipase without thermostability.

### EXAMPLES

Below, the invention will be explained in more detail by way of examples. In each example, the blank is without enzyme treatment.

### EXAMPLE 1

The water content of a slurry of paper-making raw material containing mechanical pulp obtained by trituration in a grinder or refiner (in the following called "pulp slurry") was determined by a device for determining water content (Moisture Balance EB 330MOC, product of Shimadzu Seisakusho), and after adjusting to pH 4.5 with 1/10 N sulphuric acid, the concentration of the pulp slurry was adjusted to 4%. Samples of 500 g each of this pulp slurry were measured out and set in an incubator. Until each pulp slurry reached the fixed temperature, it was stirred at 300 rpm using a Three-One Motor (product of Shinto Kagaku). While continuing the stirring, a fixed amount of enzyme was added and was allowed to react for 2 hours.

The amount of enzyme for 500 g of 4% slurry was 78 Olive Oil Units for SP 341 and 67 Olive Oil Units for SP 344. 1 Olive Oil Unit is the amount of enzyme that liberates 1 »M of fatty acid per minute with olive oil as substrate, determined by the JIS method for lipase enzyme activity.

Immediately after completion of the reaction, 150 g from each sample was taken into a 500 cc beaker, and after adding 350 cc deionized water it was extracted with 200 cc of a 1:1 chloroform:methanol solution. 4 ml of 1% litocholic acid was added as internal standard. After suction filtration on filter paper, the solvent layer was analyzed by latroscan (product of latron). The developing system was as follows:
First time: hexane.
Second time: hexane:ether:ethanol:acetic acid = 90:8:2:2.

The amount of triglycerides in the hydrolysed pulp slurry (in percent of the blank) was calculated from the internal standard and is shown in Table 1 as % hydrolysis = 100% - % residual triglyceride.

**Table 1**

| **Hydrolysis of triglycerides by lipase (SP 341 and SP 344) at various temperatures** | | |
|---|---|---|
| | SP 341 | SP 344 |
| 40°C | 85.7% | 84.3% |
| 60°C | 95.2% | 96.5% |
| 70°C | 88.2% | 97.7% |
| 80°C | 57.5% | 84% |

### EXAMPLE 2

In accordance with Example 1, the reaction temperature was fixed at 80°C, and the hydrolysis of triglycerides at various enzyme concentrations was determined and is shown in Table 2.

**Table 2**

| **Hydrolysis of triglycerides at various concentrations of SP 341 and SP 344 at 80°C** | | | |
|---|---|---|---|
| SP 341 | | SP 344 | |
| Concentration^{*1} | Degree of hydrolysis | Concentration^{*1} | Degree of hydrolysis |
| 39 | 11.2% | 33.5 | 23.1% |
| 78 | 12.6% | 67 | 51.3% |
| 156 | 29.7% | 134 | 78.3% |
| 312 | 61.8% | 268 | 93% |
| 624 | 72.4% | 536 | 100% |

| | | | |
|---|---|---|---|
| * 1) Olive Oil Units of each enzyme added to 500 g of 4% pulp slurry | | | |

### Comparative example

Using Lipase OF of Meito Sangyo (a known lipase produced by *Candida cylindracea*), the degree of hydrolysis at various temperatures was determined in accordance with the method described in Example 1. The results are shown in Table 3. The amount of enzyme was 184 Olive Oil Units for 500 g of 4% pulp slurry.

**Table 3**

| **Degree of hydrolysis at various temperatures with Lipase OF** | |
|---|---|
| | Degree of hydrolysis |
| 40°C | 81.8% |
| 50°C | 71.6% |
| 60°C | 24.9% |
| 70°C | 0 |
| 80°C | 0 |

As seen clearly from Table 3, Lipase OF was inactivated above 60°C and did not show the same heat resistance as the enzymes of this invention in the pulp slurry.

### EXAMPLE 3

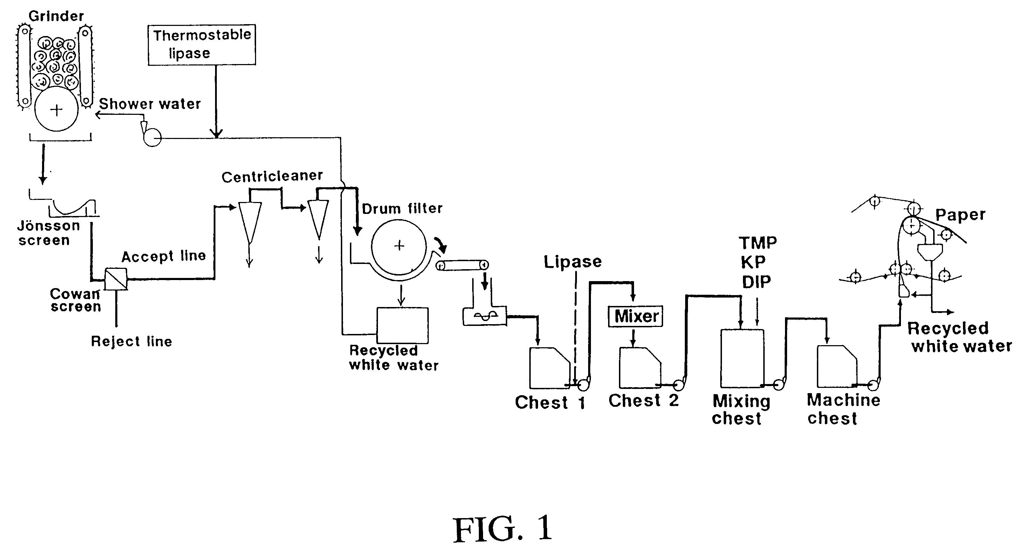

Enzyme addition was conducted in a GP product line and a newsprint papermaking line shown in the Figure, and the pitch control effect was observed. Newsprint with a weight of 46 g/m² was made with a pulp raw-material composition of GP:DIP:NKP:TMP = 30:45:10:15 in a Bel-Barie II paper machine (Beloit Co., USA) with a width of 3,800 mm and a speed of 1000 m/min. The GP in this raw material was made from debarked red pine logs by trituration in a grinder. The pulp raw material made by trituration in this grinder was passed through a so-called Jönsson screen, and after removing dust in a cleaner it was pressed in a filter. It was then diluted with white water of 30-40°C, adjusted to freeness 70-90 by post-refining, mixed with the other raw materials to prepare the finished pulp and sent to the paper-making machine. In this process, the temperature of the pulp raw material from the grinder to the filter was 60-80°C, and the holding time was about 30 minutes. The enzyme was added to the shower water in the grinder at a dosage of 1000 ppm relative to the pulp dry weight. Continuous addition was conducted for one month, and the amount of triglycerides (TG) and the frequency of attached pitch removal from the centre roll were followed to check the pitch control effect.

The enzyme used was lipase from *Candida antarctica* with an activity of 6,100 Olive Oil Units per g. A ratio of 50% seasoned red pine and 50% unseasoned red pine were used. For comparison, the amount of TG and the frequency of pitch removal from the centre roll were followed without addition of enzyme.

The results are shown in the Table below. By addition of enzyme, the amount of TG was reduced by 85% and the frequency of pitch removal was much reduced, thus clearly showing the pitch control effect of the thermostable lipase.

| | Control | With enzyme addition |
|---|---|---|
| TG amount (% of hexane extract from pulp) | 21.5 | 3.2 |
| Frequency of pitch removal from centre roll (times/day, average of one month operation) | 3.5 | 0.23 |

## Claims

1. A method for avoiding pitch troubles in a process for production of mechanical pulp or a paper-making process using mechanical pulp, characterized by adding a lipase that is able to resist temperatures above 70°C to the pulp or to white water and holding at a temperature in the range 70-90°C to hydrolyse triglycerides in the pitch, provided that the hydrolysis of triglycerides is not simultaneous with peroxy bleaching of the pulp and that the pulp is not chemithermomechanical pulp.

2. The method of claim 1, wherein the lipase is added to the pulp or to white water directly after trituration in a grinder or refiner, or the addition and holding are done in a latency tank.

3. The method of any preceding claim, wherein for the process is a paper-making process.

4. The method of any preceding claim, wherein the holding is done at a pH in the range 4.5-7.

5. The method of any preceding claim, wherein the lipase is derived from a strain of the genus *Candida* or the genus *Pseudomonas*.

6. The method of Claim 6, wherein the lipase is derived from a strain of *C. antarctica*, *C. tsukubaensis*, *C. auriculariae*, *C. humicola*, *C. foliarum*, *P. cepacia*, *P. fluorescens*, or *P. fragi*.

7. The method of Claim 7, wherein the lipase is derived from a strain of *C. antarctica* or *P. cepacia*, and is preferably *C. antarctica* lipase A.

8. The method of any preceding claim, wherein the lipase is added in an amount of 1-50 (preferably 5-25) Olive Oil Units per g dry substance in the pulp or white water.

9. The method of any preceding claim, wherein the holding temperature is in the range 70-80°C.

10. The method of any preceding claim, wherein the holding time is in the range from 10 minutes to 5 hours, preferably 0.5-2 hours.

11. The method of claims 1 to 3, 5 to 8, 10, wherein the pulp is made from a mixture of 50% seasoned and 50% unseasoned red pine.

## Patentansprüche

1. Verfahren zur Vermeidung von Harzproblemen in einem Verfahren zur Herstellung von mechanischem Holzstoff oder in einem Papierherstellungsverfahren unter Verwendung von mechanischem Holzstoff, gekennzeichnet durch Zugabe einer Lipase, die gegenüber Temperaturen über 70°C beständig ist, zum Holzstoff oder zum Siebwasser und durch Belassen bei einer Temperatur im Bereich von 70-90°C, um Triglyceride im Harz zu hydrolysieren, mit der Maßgabe, daß die Hydrolyse von Triglyceriden nicht gleichzeitig mit einer peroxidischen Bleichung des Holzstoffs erfolgt und daß es sich beim Holzstoff nicht um chemithermomechanischen Holzstoff handelt.

2. Verfahren nach Anspruch 1, wobei die Lipase zum Holzstoff oder zum Siebwasser direkt nach dem Zermahlen in einer Schleifvorrichtung oder in einem Refiner zugesetzt wird oder die Zugabe und das Belassen in einem Latenzbehälter durchgeführt werden.

3. Verfahren nach einem der vorstehenden Ansprüche, wobei es sich bei dem Verfahren um ein Papierherstellungsverfahren handelt.

4. Verfahren nach einem der vorstehenden Ansprüche, wobei das Belassen bei einem pH-Wert im Bereich von 4,5-7 durchgeführt wird.

5. Verfahren nach einem der vorstehenden Ansprüche, wobei die Lipase von einem Stamm der Gattung *Candida* oder der Gattung *Pseudomonas* abgeleitet ist.

6. Verfahren nach Anspruch 5, wobei die Lipase von einem Stamm von *C. antarctica*, *C. tsukubaensis*, *C. auriculariae*, *C. humicola*, *C. foliarum*, *P. cepacia*, *P. fluorescens* oder *P. fragi* abgeleitet ist.

7. Verfahren nach Anspruch 6, wobei die Lipase von einem Stamm von *C. antarctica* oder *P. cepacia* abgeleitet ist und es sich vorzugsweise um *C. antarctica*-Lipase A handelt.

8. Verfahren nach einem der vorstehenden Ansprüche, wobei die Lipase in einer Menge von 1-50 (vorzugsweise 5-25) Olivenöl-Einheiten pro g Trockensubstanz im Holzstoff oder im Sieb wasser zugesetzt wird.

9. Verfahren nach einem der vorstehenden Ansprüche, wobei die Temperatur im Bereich von 70-80°C belassen wird.

10. Verfahren nach einem der vorstehenden Ansprüche, wobei die Behandlungszeit im Bereich von 10 Minuten bis 5 Stunden und vorzugsweise von 0,5-2 Stunden liegt.

11. Verfahren nach den Ansprüchen 1 bis 3, 5 bis 8 und 10, wobei der Holzstoff aus einem Gemisch von 50% ausgewitterter Rotkiefer und 50% nicht-ausgewitterter Rotkiefer hergestellt wird.

## Revendications

1. Procédé pour éviter des problèmes dus à la poix dans un traitement destiné à produire de la pâte mécanique ou dans un traitement de fabrication de papier utilisant de la pâte mécanique, caractérisé en ce qu'on ajoute une lipase, qui est capable de résister à des températures supérieures à 70°C, à la pâte ou à l'eau blanche et on maintient à un niveau de température situé dans la plage allant de 70 à 90°C pour hydrolyser les triglycérides existant dans la poix, pourvu que l'hydrolyse des triglycérides ne soit pas simultanée au blanchiment de la pâte à l'aide de peroxyde et que la pâte ne soit pas une pâte thermomécanochimique.

2. Procédé selon la revendication 1, dans lequel la lipase est ajoutée à la pâte ou à l'eau blanche directement après trituration dans un broyeur ou un raffineur, ou l'addition et le maintien sont réalisés dans un réservoir de latence.

3. Procédé selon l'une quelconque des revendications précédentes, dans lequel le procédé est un procédé de fabrication de papier.

4. Procédé selon l'une quelconque des revendications précédentes, dans lequel le maintien est réalisé au niveau d'un pH situé dans la plage allant de 4,5 à 7.

5. Procédé selon l'une quelconque des revendications précédentes, dans lequel la lipase est dérivée d'une souche du genre *Candida* ou du genre *Pseudomonas*.

6. Procédé selon la revendication 5, dans lequel la lipase est dérivée d'une souche de *C. antarctica*, *C. tsukubaensis*, *C. auriculariae*, *C. humicola*, *C. foliarum*, *P. cepacia*, *P. fluorescens* ou *P. fragi*.

7. Procédé selon la revendication 6, dans lequel la lipase est dérivée d'une souche de *C. antarctica*, ou de *P. cepacia*, et est de préférence la lipase A de C. *antarctica*.

8. Procédé selon l'une quelconque des revendications précédentes, dans lequel la lipase est ajoutée selon une quantité de 1 à 50 (de préférence de 5 à 25) Unités d'Huile d'Olive par g de substance sèche de la pâte ou d'eau blanche.

9. Procédé selon l'une quelconque des revendications précédentes, dans lequel la température de maintien est située dans la plage allant de 70 à 80°C.

10. Procédé selon l'une quelconque des revendications précédentes, dans lequel le temps de maintien est situé dans la plage allant de 10 minutes à 5 heures, de préférence de 0,5 à 2 heures.

11. Procédé selon les revendications 1 à 3, 5 à 8, 10, dans lequel la pâte est constituée à partir d'un mélange de 50% de pin rouge vieilli et de 50% de pin rouge non-vieilli.
